# EUROPÄISCHE PATENTSCHRIFT

(11) **EP 3 314 625 B1**
(45) Veröffentlichungstag und Bekanntmachung des Hinweises auf die Patenterteilung: **11.10.2023**
(21) Anmeldenummer: 16727958.7
(22) Anmeldetag: 09.06.2016
(51) Int. Cl.: H01H 1/02, C22C 21/06, C22C 9/02, B32B 15/01, C22C 13/00

(54) **STECKVERBINDER AUS EINEM BAND AUS EINER ALUMINIUM-LEGIERUNG**
PLUG CONNECTOR FROM AN ALUMINUM ALLOY STRIP
CONNECTEUR ENFICHABLE CONSTITUÉ D'UN FEUILLARD EN ALLIAGE D'ALUMINIUM

(30) Priorität: 29.06.2015 DE 102015008302; 30.07.2015 DE 102015009944
(43) Veröffentlichungstag der Anmeldung: 02.05.2018
(73) Patentinhaber: Diehl Metal Applications GmbH, 14167 Berlin (DE)
(72) Erfinder: ZEIGMEISTER, Uwe, 14513 Teltow (DE); BUCHHOLZER, Christian, 12347 Berlin (DE); STEIN, André, 13129 Berlin (DE); CORREIA, Sandra, 43370 Bains (FR); PREUß, Stephan, 12207 Berlin (DE); WUNDERLICH, Martin, 13595 Berlin (DE)
(74) Vertreter: Diehl Patentabteilung
(86) Internationale Anmeldenummer: PCT/EP2016/000949
(87) Internationale Veröffentlichungsnummer: WO 2017/001042

(56) Entgegenhaltungen:
- EP-A1- 1 284 301
- EP-A1- 1 788 585
- EP-A1- 2 799 595
- DE-T5-112013 004 236
- SHAO C B ET AL: "Electric contact behavior of Cu-Sn intermetallic compound formed in tin platings", ELECTRICAL CONTACTS - 1998. PROCEEDINGS OF THE 44TH IEEE HOLM CONFERENCE ON ELECTRICAL CONTACTS. ARLINGTON, VA, OCT. 26 - 28, 1998; [IEEE HOLM CONFERENCE ON ELECTRICAL CONTACTS SPONSORS], NEW YORK, NY : IEEE, US, 26. Oktober 1998 (1998-10-26), Seiten 26-33, XP032156915, DOI: 10.1109/HOLM.1998.722424 ISBN: 978-0-7803-4925-4

## Beschreibung

Die Erfindung betrifft einen Steckverbinder aus einem Band aus einer Aluminium-Legierung.

Eine solche Aluminium-Legierung ist aus Dettner/Elze, Handbuch der Galvanotechnik, Band I / 2, S. 1033 - 1047, Carl Hanser Verlag, München, bekannt. Darin wird das Aufbringen einer Haftvermittlerschicht aus Zink mittels eines Zinkatbeizverfahrens beschrieben.

Bei Verwendung der bekannten Haftvermittlerschicht kann es nachteiligerweise zu einer Korngrenzenkorrosion durch eine Reaktion von Zink und Aluminium kommen. Des Weiteren ist das Zinkatbeizverfahren nicht für bandgalvanische Prozesse geeignet. Damit ist die Beschichtung aufwändig und z. B. für Steckverbinder oder elektrische Kontaktelemente gegenüber Kupfer-basierten Steckverbindern nicht konkurrenzfähig. EP 1788585 A1 offenbart einen Steckverbinder mit eine galvanisch aufgetragene Schicht.

Aufgabe der vorliegenden Erfindung ist es, die Nachteile nach dem Stand der Technik zu beseitigen. Insbesondere soll ein Steckverbinder aus einem Band aus einer Aluminium-Legierung angegeben werden.

Diese Aufgabe wird durch die Merkmale des Patentanspruchs 1 gelöst. Zweckmäßige Ausgestaltungen der Erfindung ergeben sich aus den Merkmalen der Patentansprüche 2 bis 6.

Nach Maßgabe der Erfindung wird vorgeschlagen, dass die Haftvermittlerschicht eine galvanisch aufgetragene Kupfer-Zinn-Legierung ist und unmittelbar auf die Aluminium-Legierung aufgetragen ist. Erfindungsgemäß weist die Haftvermittlerschicht eine Dicke von höchstens 50 nm auf. Auf die Haftvermittlerschicht ist eine weitere Metall- oder Legierungsschicht aufgebracht.

Die Kupfer-Zinn-Legierung wird mittels eines Kupfer enthaltenden galvanischen Bads auf das Band aufgebracht. Die Legierung entsteht während oder nach dem Aufbringen der Metalle aus einer Folge von galvanischen Bändern. Erfindungsgemäß wird unter einem "Band" ein Werkstück verstanden, welches ein Blechband, ein in Form zusammenhängender und zu später vereinzelnder Stanzteile ausgebildetes Band oder ein Halbzeug ist. Das erfindungsgemäße Band ist insbesondere für eine Beschichtung durch einen bandgalvanischen Prozess geeignet.

Bei der galvanischen Beschichtung kann es sich um eine "konventionelle galvanische Beschichtung", bei der das Werkstück, insbesondere das Band, partiell oder als Ganzes in ein galvanisches Bad getaucht wird, oder um einen bandgalvanischen Prozess handein.

Unter einem "bandgalvanischen Prozess" wird ein Prozess verstanden, bei dem ein Band von einer Rolle abgerollt, zur Beschichtung durch das galvanische Bad geführt und nachfolgend auf einer weiteren Rolle wieder aufgerollt oder in anderer Weise weiterverarbeitet wird. Man spricht in diesem Zusammenhang auch von einem sogenannten "Rolle-zu-Rolle Verfahren".

Typischerweise wird durch das galvanische Auftragen der Haftvermittlerschicht ein natives Oberflächenoxid der Aluminium-Legierung zumindest zum Teil, insbesondere vollständig, weggeätzt.

Zweckmäßigerweise enthält die Kupfer-Zinn-Legierung Cu₃Sn oder Cu₆Sn₅. Vorzugsweise besteht die Kupfer-Zinn-Legierung entweder aus Cu₃Sn oder aus Cu₆Sn₅ sowie unvermeidbaren Verunreinigungen.

Die Korngröße der Körner der Haftvermittlerschicht liegt vorzugsweise in einem Bereich von 10 bis 100 nm, insbesondere 10 bis 30 nm.

Zweckmäßigerweise enthält die Aluminium-Legierung mindestens 80 Gew.-% Aluminium, vorzugsweise mindestens 90 Gew.-% Aluminium, insbesondere mindestens 95 Gew.-% Aluminium.

Vorzugsweise ist die weitere Metall- oder Legierungsschicht aus zumindest einem Metall oder einer Legierung der folgenden Gruppe hergestellt: Silber, Silber-Zinn, Silber-Antimon, Gold, Gold-Kobalt, Kupfer, Nickel, Nickel-Phosphor, Nickel-Wolfram, Indium, Blei, Palladium-Nickel, Zinn, Zinn-Blei oder Zink. Es können eine einzige oder mehrere weitere Metall- oder Legierungsschicht vorgesehen sein. Jede der weiteren Metall- oder Legierungsschichten kann insbesondere eine Schichtdicke zwischen 50 nm und 15 µm, vorzugsweise 0,5 µm bis 9 µm, insbesondere 1 µm bis 4 µm aufweisen. Zweckmäßigerweise wird die zumindest eine weitere Metall- oder Legierungsschicht auch mittels eines bandgalvanischen Prozesses aufgebracht.

Der Vorteil der Beschichtung mit einer Haftvermittlerschicht aus einer Kupfer-Zinn-Legierung besteht darin, dass die Beschichtung mittels eines bandgalvanischen Prozesses möglich ist. Damit kann eine Gesamtbeschichtungsdauer auf einen Bruchteil der herkömmlichen Beschichtungsdauer reduziert werden. Bänder mit der erfindungsgemäßen Beschichtung können kostengünstig hergestellt werden. Ein Einsatz der erfindungsgemäß beschichteten Bänder, z. B. für die Herstellung von Steckverbindern, elektrischen Kontaktelementen, insbesondere als Zellverbinder in der Elektromobilität und dgl., ist möglich.

Nachfolgend wird die Erfindung anhand von Zeichnungen näher erläutert. Es zeigen:
- Fig. 1: eine schematische Darstellung der beschichteten Aluminiumlegierung mit Haftvermittlerschicht und weiterer Metall- oder Legierungsschicht,
- Fig.2: eine schematische Darstellung gemäß Fig. 1 mit weiteren Metall- oder Legierungsschichten.

Die Zeichnungen geben nur die Abfolge der Schichten wieder. Es soll aus den Zeichnungen keine Aussage über die einzelnen Schichtdicken getroffen werden.

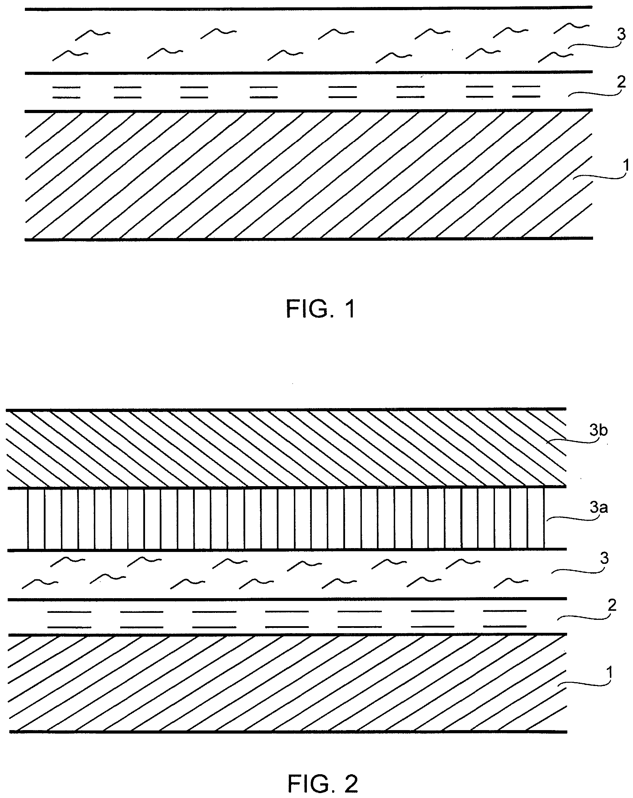

Fig. 1 zeigt das Band aus einer Aluminium-Legierung 1. Unmittelbar auf die Aluminium-Legierung 1 folgt die Haftvermittlerschicht 2. Die Haftvermittlerschicht 2 besteht z. B. aus Cu₃Sn. Die oberste Schicht bildet eine weitere Metall- oder Legierungsschicht 3. Die weitere Metall- oder Legierungsschicht 3 ist z. B. eine lötbare Zinn-Schicht.

Die Bildung der Legierung der Haftvermittlerschicht 2 kann sich als Folge von galvanischen Bädern ergeben.

Fig. 2 zeigt eine Ausführung gemäß Fig. 1, bei der oberhalb der Haftvermittlerschicht 2 drei weitere Metall- oder Legierungsschichten 3, 3a 3b liegen. Als Beispiel dazu wird Folgendes ausgeführt: Auf ein Band mit einer Breite von 40 mm und einer Dicke von 0,5 mm aus einer Aluminium-Magnesium-Legierung mit 3 Gew.-% Magnesium ist eine Haftvermittlerschicht 2 aus einer Kupfer-Zinn-Legierung mit einer Dicke von 30 nm, darauf eine erste weitere Metall- oder Legierungsschicht 3 aus Kupfer mit einer Dicke von 100 nm, darauf eine zweite weitere Metall- oder Legierungsschicht 3a aus Nickel mit einer Dicke von 0,5 µm oder größer und darauf eine dritte weitere Metall- oder Legierungsschicht 3b Zinn mit einer Dicke von 2 µm als Oberflächenschicht aufgebracht. Das so beschichtete Band stellt ein Halbzeug für die Weiterverarbeitung dar. Hieraus können z. B. Steckverbinder hergestellt werden. Die dritte weitere Metall- oder Legierungsschicht 3b ist zur Herstellung einer Lötverbindung geeignet.

Zur Herstellung der Beschichtung wird z. B. das sogenannte Tauchtiefe-Verfahren verwendet, bei dem nur der zu beschichtende Bereich des Bands in das Beschichtungsbad eingetaucht wird. Der andere Bereich des Bands bleibt ohne Beschichtung. Das Band durchläuft mehrere Beschichtungsbäder zur Beschichtung mit einer Kupfer-Zinn-Legierung, nachfolgend ein Bad zur Beschichtung mit Kupfer, daraufhin ein weiteres Bad zur Beschichtung mit Nickel und im Weiteren ein letztes Bad zur Beschichtung mit Zinn. Die Verweildauer und/oder die Stromstärke und Stromdichte ist/sind im jeweiligen Bad so angepasst, dass eine vorgegebene Schichtdicke erzielt wird. Notwendige Reinigungsschritte sind vor bzw. zwischen und nach den einzelnen Bädern geschaltet.

### BEZUGSZEICHENLISTE

- 1: Aluminium-Legierung
- 2: Haftvermittlerschicht
- 3, 3a, 3b: weitere Metall- oder Legierungsschicht

## Patentansprüche

1. Steckverbinder hergestellt aus einem Band aus einer Aluminium-Legierung (1), umfassend zumindest eine Haftvermittlerschicht (2),
wobei die Haftvermittlerschicht (2) eine galvanisch aufgetragene Kupfer-Zinn-Legierung ist und unmittelbar auf die Aluminium-Legierung (1) aufgetragen ist,
wobei die Haftvermittlerschicht (2) eine Dicke von höchstens 50 nm aufweist, und
wobei auf die Haftvermittlerschicht (2) eine weitere Metall- oder Legierungsschicht (3, 3a, 3b) aufgebracht ist.

2. Steckverbinder nach Anspruch 1, wobei die Kupfer-Zinn-Legierung Cu₃Sn oder Cu₆Sn₅ enthält.

3. Steckverbinder nach Anspruch 2, wobei die Kupfer-Zinn-Legierung aus Cu₃Sn oder aus Cu₆Sn₅ sowie unvermeidbaren Verunreinigungen besteht.

4. Steckverbinder nach einem der vorhergehenden Ansprüche, wobei eine Korngröße der Körner der Haftvermittlerschicht (2) in einem Bereich von 10 bis 30 nm liegt.

5. Steckverbinder nach einem der vorhergehenden Ansprüche, wobei die Aluminium-Legierung (1) mindestens 80 Gew. % Aluminium, vorzugsweise mindestens 90 Gew. % Aluminium, insbesondere mindestens 95 Gew. % Aluminium, enthält.

6. Steckverbinder nach einem der vorhergehenden Ansprüche, wobei die weitere Metall- oder Legierungsschicht (3, 3a, 3b) ein Metall oder eine Legierung aus der folgenden Gruppe enthält: Silber, Silber-Zinn, Silber-Antimon, Gold, Gold-Kobalt, Kupfer, Nickel, Nickel-Phosphor, Nickel-Wolfram, Indium, Blei, Palladium-Nickel, Zinn, Zinn-Blei, Zink.

## Claims

1. Plug-in connector made from a strip of an aluminum alloy (1), comprising at least one bonding layer (2),
wherein the bonding layer (2) is an electrolytically applied copper/tin alloy and is applied directly onto the aluminum alloy (1),
wherein the bonding layer (2) has a thickness of at most 50 nm, and
wherein a further metal layer or alloy layer (3, 3a, 3b) is applied onto the bonding layer (2).

2. Plug-in connector according to Claim 1, wherein the copper/tin alloy contains Cu₃Sn or Cu₆Sn₅.

3. Plug-in connector according to Claim 2, wherein the copper/tin alloy consists of Cu₃Sn or of Cu₆Sn₅ together with unavoidable impurities.

4. Plug-in connector according to one of the preceding claims, wherein a grain size of the grains of the bonding layer (2) lies in a range of from 10 to 30 nm.

5. Plug-in connector according to one of the preceding claims, wherein the aluminum alloy (1) contains at least 80 wt% aluminum, preferably at least 90 wt% aluminum, in particular at least 95 wt% aluminum.

6. Plug-in connector according to one of the preceding claims, wherein the further metal layer or alloy layer (3, 3a, 3b) contains a metal or an alloy from the following group: silver, silver/tin, silver/antimony, gold, gold/cobalt, copper, nickel, nickel/phosphorus, nickel/tungsten, indium, lead, palladium/nickel, tin, tin/lead, zinc.

## Revendications

1. Connecteur enfichable fabriqué à partir d'une bande en un alliage d'aluminium (1), comprenant au moins une couche promotrice d'adhérence (2),
dans lequel la couche promotrice d'adhérence (2) est un alliage cuivre-étain appliqué par galvanoplastie et appliqué directement sur l'alliage d'aluminium (1),
dans lequel la couche promotrice d'adhérence (2) présente une épaisseur d'au plus 50 nm, et
dans lequel une couche supplémentaire d'un métal ou d'un alliage (3, 3a, 3b) est appliquée sur la couche promotrice d'adhérence (2).

2. Connecteur enfichable selon la revendication 1, dans lequel l'alliage cuivre-étain contient du Cu₃Sn ou du Cu₆Sn₅.

3. Connecteur enfichable selon la revendication 2, dans lequel l'alliage cuivre-étain est constitué de Cu₃Sn ou de Cu₆Sn₅ ainsi que des impuretés inévitables.

4. Connecteur enfichable selon l'une des revendications précédentes, dans lequel la granulométrie des grains de la couche promotrice d'adhérence (2) est comprise dans la plage de 10 à 30 nm.

5. Connecteur enfichable selon l'une des revendications précédentes, dans lequel l'alliage d'aluminium (1) contient au moins 80 % en poids d'aluminium, de préférence au moins 90 % en poids d'aluminium, en particulier au moins 95 % en poids d'aluminium.

6. Connecteur enfichable selon l'une des revendications précédentes, dans lequel l'autre couche d'un métal ou d'un alliage (3, 3a, 3b) contient un métal ou un alliage du groupe suivant : argent, argent-étain, argent-antimoine, or, or-cobalt, cuivre, nickel, nickel-phosphore, nickel-tungstène, indium, plomb, palladium-nickel, étain, étain-plomb, zinc.
